# FASCICULE DE BREVET EUROPEEN

(11) **EP 2 083 150 B1**
(45) Date de publication et mention de la délivrance du brevet: **28.07.2010**
(21) Numéro de dépôt: 09150756.6
(22) Date de dépôt: 16.01.2009
(51) Int. Cl.: F01D 25/16, F02C 7/06, F01D 21/04

(54) **Guidage d'un arbre dans une turbomachine**
Führung einer Welle in einem Turbotriebwerk
Guiding of a shaft in a turbomachine

(30) Priorité: 23.01.2008 FR 0800332
(43) Date de publication de la demande: 29.07.2009
(73) Titulaire: SNECMA, 75015 Paris (FR)
(72) Inventeur: Mons, Claude, Marcel, 77176, Savigny le Temple (FR); Raberin, Laurent, 75005, Paris (FR); Rongvaux, Jean-Marc, 91290, La Norville (FR); Rousselin, Stéphane, 77850, Hericy (FR)
(74) Mandataire: Ramey, Daniel

(56) Documents cités:
- EP-A- 1 130 243
- EP-A- 1 344 896
- EP-A- 1 577 422
- FR-A- 2 841 592
- FR-A- 2 888 621
- GB-A- 2 444 935

## Description

La présente invention se rapporte au support des paliers de guidage d'arbres de rotor dans les turbomachines, telles que les turboréacteurs d'avion à double flux.

Les aubes de soufflante des turboréacteurs peuvent subir des dommages, par exemple suite à l'ingestion d'un corps étranger tel qu'un oiseau ou un bloc de glace.

En général, la soufflante est suffisamment robuste pour supporter les effets d'une telle ingestion et continuer à fonctionner, éventuellement à un régime réduit.

Toutefois, il arrive que l'ingestion d'un corps étranger provoque la rupture d'une ou de plusieurs aubes de la soufflante, susceptible d'entraîner l'apparition d'un balourd important nécessitant un arrêt du moteur, et de nature à soumettre la structure du turboréacteur à des efforts cycliques considérables, tout au moins pendant le ralentissement du moteur jusqu'à son régime de fonctionnement en moulinet ou régime d'autorotation, c'est-à-dire son régime de rotation libre résultant de son déplacement dans l'atmosphère.

Pour éviter le transfert des efforts de balourd à la structure du turboréacteur, on a proposé de découpler du stator l'arbre du compresseur basse pression, qui porte la soufflante.

Cet arbre est en général guidé radialement par deux paliers portés par le stator. Un premier palier, appelé parfois palier amont ou palier de butée, comprend un roulement à billes agencé à l'extrémité amont de l'arbre et est porté par un support annulaire relié à un carter intermédiaire du turboréacteur, tandis qu'un second palier, couramment appelé palier aval, comprend un roulement à rouleaux agencé en aval du premier palier.

On a proposé des dispositifs de découplage du palier amont comprenant des vis « fusibles » pour relier le support de ce palier au carter intermédiaire, d'autres comprenant un support de palier présentant une striction locale calibrée pour permettre une déformation du support au-delà d'une charge appliquée prédéterminée, ou encore un support de palier ondulé destiné à flamber sous une certaine charge. On a également proposé des dispositifs comprenant des colonnettes « fusibles » au niveau du palier amont.

Cependant, lorsque le palier amont a été découplé du stator, il n'assure plus le centrage de l'arbre du compresseur basse pression, et bien que les charges résultant du balourd soient moins importantes une fois que le régime d'autorotation est atteint, ces charges sont alors essentiellement supportées par le palier aval, qui risque donc de casser.

Pour éviter cet inconvénient, des dispositifs ont été proposés, dans lesquels le palier aval est par exemple monté sur un support articulé pour permettre à l'arbre de se désaxer sans détruire ce palier aval, mais ces dispositifs conduisent à des surcroîts de masse pénalisant les performances du turboréacteur.

En outre, avec les dispositifs connus et dans les cas où l'arbre du compresseur basse pression s'est rompu, sa partie amont n'est plus retenue axialement par le palier amont, ce qui risque de mettre en péril le turboréacteur.

L'invention a notamment pour but d'apporter une solution simple, économique et efficace à ces problèmes, permettant d'éviter les inconvénients précités.

Elle a en particulier pour but de permettre, après un découplage d'un des paliers de guidage de l'arbre du compresseur basse pression, un recentrage de l'arbre dès que le turboréacteur a atteint son régime d'autorotation pour éviter la destruction de l'autre palier de guidage et pour préserver la structure du turboréacteur.

Elle propose à cet effet un support de palier pour le guidage d'un arbre dans une turbomachine, telle qu'un turboréacteur, comprenant une partie annulaire reliée au palier, **caractérisé en ce que** la partie annulaire est réalisée dans un matériau du type à mémoire de forme qui conserve une forme initiale, quand la charge qui lui est appliquée reste inférieure à une valeur seuil et qui se déforme en absorbant de l'énergie quand la charge appliquée devient au moins égale à la valeur seuil, cette partie annulaire étant capable de reprendre au moins approximativement sa forme initiale quand la charge appliquée redevient inférieure à la valeur seuil.

La partie annulaire en matériau à mémoire de forme permet, en se déformant, de découpler du carter le palier qu'elle supporte, lorsque l'arbre transmet au palier des charges qui dépassent une valeur seuil prédéterminée, pour absorber l'énergie mécanique générée par ces charges et éviter que ces dernières ne soient transmises au carter puis à l'ensemble de la structure du turboréacteur.

Ces charges sont typiquement des charges de balourd résultant de l'ingestion d'un corps étranger, tel qu'un oiseau ou un bloc de glace, ayant endommagé la soufflante de la turbomachine.

Après l'arrêt du moteur, et dès que le turboréacteur a atteint son régime d'autorotation dans lequel les charges transmises par l'arbre sont moins importantes, la partie annulaire reprend sensiblement sa forme initiale et permet ainsi au palier d'assurer de nouveau le centrage de l'arbre.

En outre, les paliers sont en mesure de garantir la retenue axiale de l'extrémité amont de l'arbre, et ce même pendant le découplage.

Selon une autre caractéristique de l'invention, le support de palier comprend des moyens commandés de chauffage de la partie annulaire en matériau à mémoire de forme, pour amener cette partie annulaire à reprendre sa forme initiale quand la charge appliquée est inférieure à la valeur seuil.

Les moyens de chauffage sont particulièrement adaptés au cas où le matériau à mémoire de forme est du type à « simple effet » et est initialement à l'état de martensite susceptible de se déformer de manière importante sous l'effet des charges en absorbant de l'énergie mécanique pour permettre le découplage du support de palier, les moyens de chauffage permettant ensuite de provoquer sur commande un passage du matériau à mémoire de forme en phase austénitique pour l'amener à reprendre une forme apprise sensiblement identique à sa forme initiale de sorte que le support de palier retrouve sa forme initiale et soit de nouveau en mesure d'assurer le centrage de l'arbre.

Avantageusement, les moyens de chauffage comprennent des moyens d'amenée d'air chaud sur la partie annulaire en matériau à mémoire de forme.

L'air chaud peut par exemple être prélevé au niveau du compresseur haute-pression du turboréacteur.

Le support de palier selon l'invention comprend avantageusement des moyens de guidage d'air chaud sur la partie annulaire en matériau à mémoire de forme, comportant par exemple un déflecteur en tôle monté autour de la partie annulaire en matériau à mémoire de forme.

Dans le cas d'un matériau de type à « simple effet », le déflecteur en tôle permet un meilleur guidage de l'air chaud destiné à déclencher le passage du matériau à mémoire de forme en phase austénitique.

En variante, le matériau à mémoire de forme est un matériau du type superélastique, qui est en phase austénitique quand la charge appliquée est inférieure à la valeur seuil et qui passe en phase martensitique à déformation élastique quand la charge appliquée devient au moins égale à la valeur seuil.

Cela permet de profiter des importantes capacités de déformation des matériaux à mémoire de forme superélastiques et d'éviter le recours à des moyens de chauffage de la partie annulaire du support de palier.

Le choix de l'une ou l'autre des variantes peut être conditionné par les aptitudes respectives des différents matériaux à mémoire de forme à absorber de l'énergie mécanique.

Selon une autre caractéristique de l'invention, la partie annulaire en matériau à mémoire de forme relie entre elles les extrémités amont et aval du support, et comprend de préférence des lamelles longitudinales régulièrement réparties autour de l'axe de la turbomachine.

De telles lamelles sont relativement répandues sur le marché des pièces en matériau à mémoire de forme, et ont de bonnes aptitudes au retour à une forme apprise préalablement.

Selon une autre caractéristique de l'invention, les extrémités des lamelles sont fixées par soudure ou brasure sur les parties d'extrémité du support.

Le support de palier selon l'invention comprend avantageusement une enveloppe annulaire d'étanchéité disposée radialement à l'intérieur de la partie annulaire en matériau à mémoire de forme.

Cette enveloppe annulaire d'étanchéité est particulièrement utile dans le cas où la partie annulaire en matériau à mémoire de forme comprend des lamelles longitudinales du type évoqué ci-dessus, pour assurer l'étanchéité de l'enceinte inter-paliers et éviter ainsi les fuites d'huile hors de l'enceinte.

L'enveloppe constitue en outre un moyen de guidage d'air chaud sur la partie annulaire en matériau à mémoire de forme, qui est particulièrement utile dans le cas où le matérieau à mémoire de forme est du type à « simple effet ».

L'invention concerne également une turbomachine comprenant un arbre guidé dans des paliers amont et aval qui sont portés par des supports fixés à un carter, caractérisée en ce qu'au moins un des supports est un support de palier du type décrit ci-dessus.

L'invention sera mieux comprise et d'autres détails, avantages et caractéristiques de celle-ci apparaîtront plus clairement à la lecture de la description suivante faite à titre d'exemple non limitatif, en référence aux dessins annexés dans lesquels :
- la figure 1 est une vue schématique partielle en coupe axiale d'une turbomachine d'un type connu ;
- la figure 2 est une vue schématique partielle en coupe axiale à plus grande échelle d'une turbomachine selon l'invention ;
- la figure 3 est une vue schématique partielle en perspective de la turbomachine de la figure 2 ;
- la figure 4 est un diagramme thermomécanique illustrant le fonctionnement de l'invention.

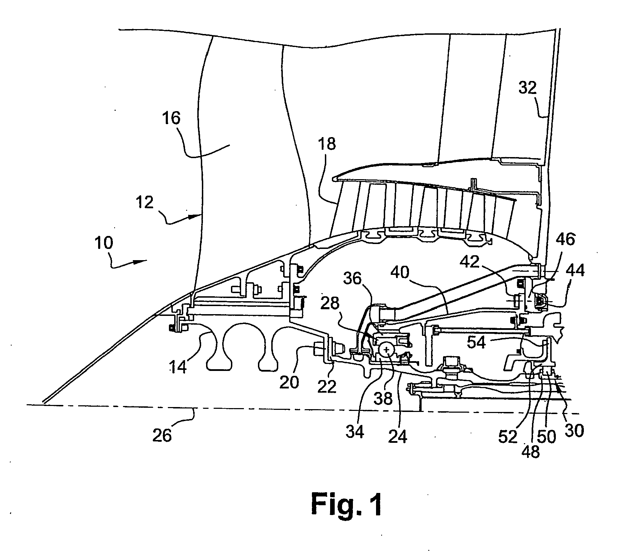

La figure 1 représente un turboréacteur d'avion à double flux 10 comprenant une soufflante 12, formée d'un disque 14 portant des aubes 16 et montée en amont d'un compresseur basse pression 18, le disque 14 étant relié par une bride annulaire 20 à une bride d'extrémité amont 22 d'un arbre 24 du compresseur basse pression destiné à entraîner la soufflante 12 en rotation autour de l'axe 26 du turboréacteur, d'une manière bien connue.

L'arbre 24 est guidé radialement et retenu axialement par deux paliers 28 et 30 portés par un carter intermédiaire 32.

Un premier palier 28 disposé au voisinage de l'extrémité amont de l'arbre 24, couramment appelé « palier de butée » ou « palier amont », comprend un roulement à billes formé essentiellement d'une cage annulaire radialement interne 34 et d'une cage annulaire radialement externe 36 délimitant une cavité sensiblement torique dans laquelle des billes 38 roulent librement.

La cage annulaire radialement externe 36 est reliée à l'extrémité amont d'une enveloppe sensiblement annulaire ou faiblement tronconique formant un support de palier 40, dont l'extrémité aval comprend une bride annulaire 42 fixée par des vis 44 sur une pièce 46 reliée au carter intermédiaire 32.

Un second palier 30 est disposé en aval du premier palier 28 et comprend un roulement à rouleaux formé essentiellement d'une bague annulaire radialement interne 48 portant des rouleaux 50 sur lesquels s'appuie une bague annulaire radialement externe 52.

La bague annulaire radialement externe 52 comprend une bride 54 de fixation au carter intermédiaire 32.

En fonctionnement, les paliers 28 et 30 assurent le centrage radial et la retenue axiale de l'arbre 24 du compresseur basse pression, le palier 28 garantissant en particulier la retenue axiale de l'extrémité amont de l'arbre en cas de rupture de ce dernier.

Lors d'un incident endommageant la soufflante et induisant un effet de balourd, comme par exemple la perte d'une aube à la suite d'une ingestion d'un corps étranger dans le turboréacteur, les paliers 28 et 30 sont soumis à des efforts cycliques considérables et transmettent une part importante de ces efforts au carter intermédiaire 32.

Bien que le moteur soit généralement arrêté dès la survenue d'un tel incident, il faut néanmoins un certain temps au turboréacteur pour atteindre son régime d'auto-rotation, c'est-à-dire son régime de rotation libre résultant de son déplacement dans l'atmosphère.

Pendant ce laps de temps, le palier amont 28, qui se trouve au plus près de la soufflante 12 et subit ainsi la plus grosse part des efforts de balourd, court le risque d'être endommagé et d'endommager le carter intermédiaire 32 auquel il est relié, et de ce fait, l'ensemble de la structure du turboréacteur.

Il est donc utile, pour protéger le palier amont 28 et préserver la structure du turboréacteur des efforts de balourd, de permettre un découplage entre ce palier amont 28 et le carter intermédiaire 32, c'est-à-dire de minimiser les efforts transmis au carter intermédiaire par l'arbre 24 du rotor basse pression.

Lorsque le turboréacteur atteint le régime d'auto-rotation, il est toutefois souhaitable de disposer à nouveau de moyens de centrage de l'arbre, pour éviter que le palier aval 30 reste seul à supporter les charges de balourd qui, bien qu'amoindries dans ce régime de rotation libre, n'en demeureraient pas moins susceptibles, à la longue, d'endommager ce palier aval 30.

Pour répondre à ce besoin, l'invention propose de remplacer le support de palier amont 40 de la turbomachine 10 par un support de palier apte à se déformer pour permettre un découplage du palier amont 28, lorsque les charges appliquées au palier amont sont trop importantes, et capable de reprendre une forme proche de sa forme initiale lorsque les charges appliquées ont suffisamment diminué, de sorte que le palier amont 28 puisse de nouveau remplir ses fonctions de centrage et de retenue axiale de l'arbre 24.

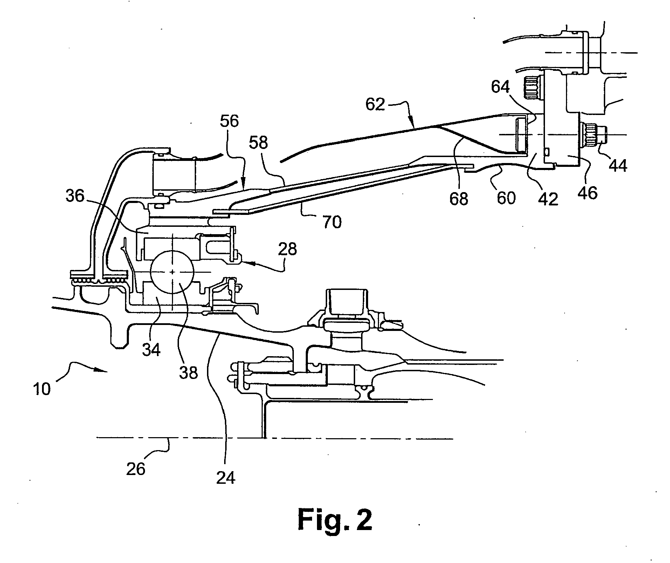

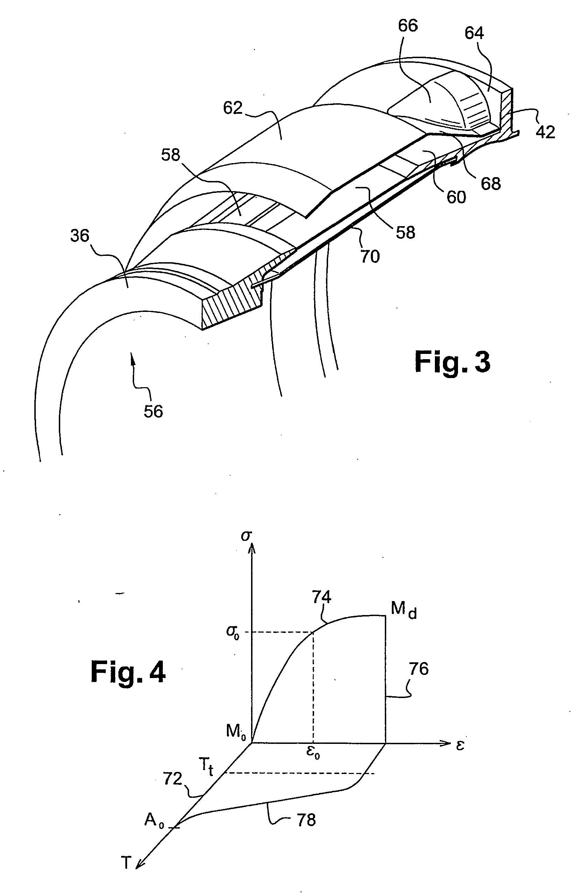

Comme le montrent les figures 2 et 3, ce nouveau support de palier amont désigné par la référence 56 comprend une partie annulaire ou légèrement tronconique formée de lamelles 58, par exemple au nombre de dix, régulièrement réparties autour de l'axe du turboréacteur et reliant l'extrémité amont 36 du support de palier 56, portant la cage radialement externe du palier amont 28, à son extrémité aval 60 portant la bride 42 de fixation à la pièce 46 reliée au carter intermédiaire 32, ces lamelles étant par exemple fixées par soudure ou brasure aux extrémités 36 et 60 du support de palier 56.

Dans un premier mode de réalisation, les lamelles 58 sont réalisées dans un matériau à mémoire de forme de type à « simple effet », tel qu'un alliage de Nickel et de Titane, appelé couramment Nitinol.

Le matériau à mémoire de forme, qui est initialement en phase martensitique, confère aux lamelles 58 une bonne capacité à se déformer, et a la possibilité, lorsqu'il est chauffé, de passer en phase austénitique en retrouvant une forme apprise.

Pour que le support de palier 56 retrouve sa forme initiale après s'être déformé, les lamelles sont préalablement préparées pour prendre, en phase austénitique, une forme semblable à leur forme initiale avant déformation, comme cela sera expliqué plus en détail dans un paragraphe ultérieur décrivant le fonctionnement de l'invention et plus particulièrement l'utilisation de l'effet mémoire «simple sens » du matériau à mémoire de forme, en référence à la figure 4.

Pour le chauffage des lamelles 58, le turboréacteur 10 comprend des moyens pour envoyer sur les lamelles de l'air ayant une température supérieure à la température de transition en phase austénitique du matériau à mémoire de forme des lamelles, cet air chaud pouvant par exemple être prélevé sur un compresseur haute pression disposé en aval du compresseur basse pression 18.

Ces moyens comprennent essentiellement un déflecteur 62 formé d'une enveloppe sensiblement cylindrique de tôle qui entoure les lamelles 58 et qui comporte à son extrémité aval une bride annulaire 64 de fixation à la bride 42 du support de palier 56.

Des canaux 66 de guidage de l'air chaud sont formés dans une partie tronconique aval 68 du déflecteur 62 et sont disposés en regard d'ouvertures aménagées dans la bride 42 pour permettre la circulation de l'air chaud vers l'amont.

Pour assurer l'étanchéité de l'enceinte inter-paliers, c'est-à-dire du volume compris entre les paliers amont 28 et aval 30 et le support de palier 56, compte tenu de la structure lamellaire de ce dernier, une enveloppe cylindrique réalisée dans un matériau souple, tel qu'un élastomère, relie entre elles les extrémités amont 36 et aval 60 du support de palier 56 de manière à former une bavette 70.

Cette bavette 70 est disposée radialement à l'intérieur du support de palier et permet le cas échéant la retenue de l'air chaud au voisinage des lamelles 58.

La figure 4 est un diagramme représentant la déformation ε des lamelles en matériau à mémoire de forme en fonction de la contrainte mécanique σ qui leur est appliquée et de la température T, pendant le fonctionnement du turboréacteur décrit précédemment.

Au cours de la préparation des lamelles 58, on leur a conféré une forme correspondant à la géométrie normale du support de palier 56, alors que les lamelles se trouvaient en phase austénitique à une température élevée, cet état étant représenté par le point A₀ de la figure 4, puis on a refroidi les lamelles sans leur appliquer de contrainte pour les faire passer sans déformation en phase martensitique, selon une transition 72 aboutissant à l'état M₀ de la figure 4.

En régime de fonctionnement normal, les lamelles 58 se trouvent sensiblement dans cet état M₀, de sorte que le palier amont 28 remplit ses fonctions de centrage et de retenue axiale de l'arbre 24 du compresseur basse pression. Tant que la contrainte mécanique σ appliquée aux lamelles est inférieure à une valeur seuil σ₀, leur rigidité demeure relativement importante, leur déformation ε n'excédant pas une valeur ε₀ relativement faible, ce qui leur permet de guider avec précision la partie amont de l'arbre 24.

Lorsque la soufflante subit des dommages, par exemple à la suite d'une ingestion d'un corps étranger, et en particulier en cas de perte d'aube, des efforts de balourds considérables sont transmis aux paliers de guidage de l'arbre 24, et plus spécialement au palier amont 28 qui se trouve au plus près de la soufflante.

La contrainte mécanique appliquée aux lamelles 58 dépasse alors la valeur seuil σ₀ de sorte que la rigidité des lamelles diminue fortement, comme l'indique la courbe 74 de la figure 4, conjointement à une augmentation de leur capacité d'absorption d'énergie mécanique.

Les efforts transmis au palier amont 28 sont alors dissipés par la déformation des lamelles 58, et ne sont donc pas transmis au carter intermédiaire 32 auquel est relié ce palier 28.

Sous l'effet des charges qui leur sont appliquées, les lamelles atteignent ainsi un état de découplage représenté par le point M_{d}.

Dans le même temps, le moteur est arrêté par un système de régulation ou sur commande du pilote de l'avion, et son régime décroît alors progressivement pour atteindre le régime d'autorotation induit par le déplacement de l'avion dans l'atmosphère, de sorte que les charges de balourd diminuent également.

Cette évolution des contraintes est représentée par la courbe 76 de la figure 4, correspondant au cas particulier où la charge appliquée redevient sensiblement nulle.

Dès que les charges ont sensiblement diminué et ne présentent plus de danger pour la structure de l'avion, le système de régulation ou le pilote commande l'envoi d'air chaud prélevé sur le compresseur haute-pression du turboréacteur vers les lamelles.

Soumises à une température supérieure à leur température de transition Tₜ, les lamelles passent en phase austénitique en suivant la courbe 78 et retrouvent leur forme initiale par effet mémoire, ce qui provoque le recentrage de l'arbre 24 du compresseur basse pression.

Le support de palier 56 proposé par l'invention permet donc un découplage entre le palier amont 28 et le carter intermédiaire 32 lorsque les charges transmises par l'arbre 24 du compresseur basse pression sont trop violentes, tout en offrant la possibilité de recentrer cet arbre dès que les charges ont retrouvé un niveau acceptable.

Le matériau à mémoire de forme des lamelles est choisi de manière à rester dans le domaine d'élasticité de la phase martensitique, dans lequel la rigidité des lamelles reste sensiblement constante quelle que soit la contrainte appliquée, en régime de fonctionnement normal, et de manière à sortir de ce domaine d'élasticité dès que les charges appliquées dépassent une valeur seuil σ₀ de nature à mettre en péril le turboréacteur. Le matériau est en outre choisi pour que sa rigidité, dans le domaine d'élasticité précité, lui permette de satisfaire le besoin de souplesse globale du support de palier 56.

Le dispositif comprenant le support de palier 56, le déflecteur 62 et la bavette 70 présente en outre l'avantage qu'il n'accroît pas significativement la masse du turboréacteur et comporte un nombre de pièces limité.

Dans un second mode de réalisation, au lieu d'exploiter un effet mémoire à simple sens, le support de palier 56 selon l'invention peut fonctionner grâce à un effet superélastique du matériau à mémoire de forme constituant les lamelles 58.

Dans ce mode de réalisation, le matériau à mémoire de forme est choisi pour être en phase austénitique aux températures de fonctionnement normal du turboréacteur.

Les charges de balourd appliquées au support de palier 56 engendrent une transition sous contrainte du matériau à mémoire de forme en phase martensitique, dans laquelle ce matériau possède une grande capacité de déformation élastique.

Dès que les charges appliquées disparaissent ou diminuent suffisamment, le matériau retourne au domaine élastique de l'austénite en retrouvant sa forme initiale.

Ce mode de réalisation de l'invention présente l'avantage de ne pas nécessiter de moyens de chauffage du matériau à mémoire de forme, et se révèle donc plus simple à mettre en oeuvre que le premier mode de réalisation décrit précédemment.

Toutefois, le choix de l'une ou l'autre variante dépend essentiellement du coût et de la disponibilité des différents types de matériaux à mémoire de forme.

## Revendications

1. Support (56) de palier (28) pour le guidage d'un arbre (24) dans une turbomachine (10), comprenant une partie annulaire (58) reliée au palier, **caractérisé en ce que** la partie annulaire (58) est réalisée dans un matériau du type à mémoire de forme qui conserve une forme initiale, quand la charge σ qui lui est appliquée reste inférieure à une valeur seuil σ₀ et qui se déforme en absorbant de l'énergie quand la charge appliquée σ devient au moins égale à la valeur seuil σ₀, cette partie annulaire (58) étant capable de reprendre au moins approximativement sa forme initiale quand la charge appliquée σ redevient inférieure à la valeur seuil σ₀.

2. Support de palier (56) selon la revendication 1, **caractérisé en ce qu'**il comprend des moyens commandés (62, 70) de chauffage de la partie annulaire (58) en matériau à mémoire de forme, pour amener cette partie annulaire (58) à reprendre sa forme initiale quand la charge appliquée σ est inférieure à la valeur seuil σ₀.

3. Support de palier (56) selon la revendication 2, **caractérisée en ce que** les moyens de chauffage comprennent des moyens (62, 70) d'amenée d'air chaud sur la partie annulaire (58) en matériau à mémoire de forme.

4. Support de palier (56) selon la revendication 3, **caractérisé en ce qu'**il comprend des moyens (62, 70) de guidage d'air chaud sur la partie annulaire (58) en matériau à mémoire de forme.

5. Support de palier (56) selon la revendication 4, **caractérisé en ce que** les moyens de guidage comprennent un déflecteur en tôle (62) monté autour de la partie annulaire (58) en matériau à mémoire de forme.

6. Support de palier (56) selon la revendication 1, **caractérisé en ce que** le matériau à mémoire de forme est un matériau du type superélastique, qui est en phase austénitique quand la charge appliquée σ est inférieure à la valeur seuil σ₀ et qui passe en phase martensitique à déformation élastique quand la charge appliquée σ devient au moins égale à la valeur seuil σ₀.

7. Support de palier (56) selon l'une des revendications 1 à 6, **caractérisé en ce que** la partie annulaire (58) en matériau à mémoire de forme relie entre elles les extrémités amont (36) et aval (60) du support (56).

8. Support de palier (56) selon l'une des revendications 1 à 7, **caractérisé en ce que** la partie annulaire en matériau à mémoire de forme comprend des lamelles longitudinales (58) régulièrement réparties autour de l'axe (26) de la turbomachine.

9. Support de palier (56) selon la revendication 8, **caractérisé en ce que** les extrémités des lamelles (58) sont fixées par soudure ou brasure sur les parties d'extrémité (36, 60) du support (56).

10. Support de palier (56) selon l'une des revendications 1 à 9, **caractérisé en ce qu'**il comprend une enveloppe annulaire d'étanchéité (70) disposée radialement à l'intérieur de la partie annulaire (58) en matériau à mémoire de forme.

11. Turbomachine (10) comprenant un arbre (24) guidé dans des paliers amont (28) et aval (30) qui sont portés par des supports (40, 52, 56) fixés à un carter (32), **caractérisée en ce qu'**au moins un des supports est un support de palier (56) selon l'une des revendications 1 à 10.

## Claims

1. A support (56) for a bearing (28) that guides a shaft (24) in a turbomachine (10), the support comprising an annular part (58) connected to the bearing, **characterized in that** the annular part (58) is made of a shape memory material which retains an initial shape when the load σ applied to it remains below a threshold value σ₀ and which deforms, absorbing energy when the applied load σ becomes at least equal to the threshold value σ₀, this annular part (58) being capable of reverting at least approximately to its initial shape when the applied load σ drops back below the threshold value σ₀.

2. A bearing support (56) according to claim 1, **characterized in that** it comprises controlled means (62, 70) of heating the shape memory annular part (58) to cause this annular part (58) to revert to its initial shape when the applied load σ is below the threshold value σ₀.

3. A bearing support (56) according to claim 2, **characterized in that** the heating means comprise means (62, 70) of conveying hot air onto the shape memory annular part (58).

4. A bearing support (56) according to claim 3, **characterized in that** it comprises means (62, 70) of guiding hot air onto the shape memory annular part (58).

5. A bearing support (56) according to claim 4, **characterized in that** the guide means comprise a sheet metal deflector (62) mounted around the shape memory annular part (58).

6. A bearing support (56) according to Claim 1, **characterized in that** the shape memory material is a material of the superelastic type which is in the austenitic phase when the applied load σ is below the threshold value σ₀ and which changes into the martensitic phase with elastic deformation when the applied load σ becomes at least equal to the threshold value σ₀.

7. A bearing support (56) according to any one of the claims 1 to 6, **characterized in that** the shape memory annular part (58) connects the upstream and downstream ends (36, 60) of the support (56) together.

8. A bearing support (56) according to any one of the claims 1 to 7, **characterized in that** the shape memory annular part comprises thin longitudinal blades (58) uniformly distributed about the axis (26) of the turbomachine.

9. A bearing support (56) according to claim 8, **characterized in that** the ends of the thin blades (58) are brazed or welded to the end parts (36, 60) of the support (56).

10. A bearing support (56) according to any one of the claims 1 to 9, **characterized in that** it comprises an annular sealing envelope (70) positioned radially on the inside of the shape memory annular part (58).

11. A turbomachine (10) comprising a shaft (24) guided in upstream and downstream bearings (28, 30) which are supported by supports (40, 52, 56) that are fixed to a casing (32), **characterized in that** at least one of the supports is a bearing support (56) according to any one of the claims 1 to 10.

## Patentansprüche

1. Lagerstütze (56) für Lager (28) für die Führung einer Welle (24) in einem Turbotriebwerk (10), welche einen ringförmigen Teil (58) enthält, der mit dem Lager verbunden ist,
**dadurch gekennzeichnet,**
**dass** der ringförmige Teil (58) aus einem Werkstoff mit Formgedächtnis ausgeführt ist, der eine ursprüngliche Form beibehält, wenn die auf ihn ausgeübte Belastung σ unterhalb eines Schwellenwerts σ₀ bleibt, und der sich unter Absorption der Energie verformt, wenn die ausgeübte Belastung σ mindestens den Schwellenwert σ₀ erreicht, wobei dieser ringförmige Teil (58) die Fähigkeit hat, zumindest annähernd seine ursprüngliche Form wieder anzunehmen, wenn die ausgeübte Belastung σ wieder geringer wird als der Schwellenwert σ₀.

2. Lagerstütze (56) nach Anspruch 1,
**dadurch gekennzeichnet,**
**dass** sie gesteuerte Mittel (62, 70) zum Erhitzen des ringförmigen Teils (58) aus Werkstoff mit Formgedächtnis aufweist, um diesen ringförmigen Teil (58) dazu zu bringen, seine ursprüngliche Form wieder anzunehmen, wenn die ausgeübte Belastung σ geringer ist als der Schwellenwert σ₀.

3. Lagerstütze (56) nach Anspruch 2,
**dadurch gekennzeichnet,**
**dass** die Heizmittel Mittel (62, 70) zum Zuführen von heißer Luft auf den ringförmigen Teil (58) aus Werkstoff mit Formgedächtnis umfassen.

4. Lagerstütze (56) nach Anspruch 3,
**dadurch gekennzeichnet,**
**dass** sie Mittel (62, 70) zum Führen von heißer Luft auf den ringförmigen Teil (58) aus Werkstoff mit Formgedächtnis enthält.

5. Lagerstütze (56) nach Anspruch 4,
**dadurch gekennzeichnet,**
**dass** die Führungsmittel ein Umlenkblech (62) umfassen, das um den ringförmigen Teil (58) aus Werkstoff mit Formgedächtnis herum angebracht ist.

6. Lagerstütze (56) nach Anspruch 1,
**dadurch gekennzeichnet,**
**dass** der Werkstoff mit Formgedächtnis ein superelastischer Werkstoff ist, der sich in der austenitischen Phase befindet, wenn die ausgeübte Belastung σ kleiner ist als der Schwellenwert σ₀, und der in die martensitische Phase der elastischen Verformung übergeht, wenn die ausgeübte Belastung σ mindestens den Schwellenwert σ₀ erreicht.

7. Lagerstütze (56) nach einem der Ansprüche 1 bis 6,
**dadurch gekennzeichnet,**
**dass** der ringförmige Teil (58) aus Werkstoff mit Formgedächtnis das vordere Ende (36) und das hintere Ende (60) der Lagerstütze (56) miteinander verbindet.

8. Lagerstütze (56) nach einem der Ansprüche 1 bis 7,
**dadurch gekennzeichnet,**
**dass** der ringförmige Teil aus Werkstoff mit Formgedächtnis längliche Lamellen (58) enthält, die um die Achse (26) des Turbotriebwerks herum gleichmäßig verteilt angeordnet sind.

9. Lagerstütze (56) nach Anspruch 8,
**dadurch gekennzeichnet,**
**dass** die Enden der Lamellen (58) durch Schweißen oder Löten an den Endteilen (36, 60) der Lagerstütze (56) befestigt sind.

10. Lagerstütze (56) nach einem der Ansprüche 1 bis 9,
**dadurch gekennzeichnet,**
**dass** sie eine ringförmige Dichtungshülle (70) aufweist, die radial innerhalb des ringförmigen Teils (58) aus Werkstoff mit Formgedächtnis angeordnet ist.

11. Turbotriebwerk (10) mit einer Welle (24), die in einem vorderen Lager (28) und einem hinteren Lager (30) geführt ist, welche von Lagerstützen (40, 52, 56) gehalten werden, die an einem Gehäuse (32) befestigt sind,
**dadurch gekennzeichnet,**
**dass** wenigstens eine der Lagerstützen eine Lagerstütze (56) nach einem der Ansprüche 1 bis 10 ist.
